# EUROPÄISCHE PATENTSCHRIFT

(11) **EP 1 479 492 B1**
(45) Veröffentlichungstag und Bekanntmachung des Hinweises auf die Patenterteilung: **03.05.2006**
(21) Anmeldenummer: 04006292.9
(22) Anmeldetag: 17.03.2004
(51) Int. Cl.: B27C 5/06, B27B 25/04

(54) **Durchlaufmaschine für die Plattenbearbeitung mit einlaufseitiger Auflagervorrichtung**
Pass-through machine for the machining of plates with supporting device at the entry side
Machine pour le traitement en continu de panneaux avec dispositif de support à l'entrée

(30) Priorität: 23.05.2003 DE 10323267
(43) Veröffentlichungstag der Anmeldung: 24.11.2004
(73) Patentinhaber: IMA Klessmann GmbH Holzbearbeitungssysteme, 32312 Lübbecke (DE)
(72) Erfinder: Rose, Martin Ing. (grad.), 32339 Espelkamp (DE); Hielscher, Ulrich, Dipl.-Ing., 32312 Lübbecke (DE)
(74) Vertreter: Elbertzhagen, Otto

(56) Entgegenhaltungen:
- DE-A- 3 707 194
- DE-A- 4 234 681
- DE-C- 19 921 058

## Beschreibung

Die Erfindung bezieht sich auf eine Durchlaufmaschine gemäß den Merkmalen des Oberbegriffs des Anspruchs 1.

Bei solchen Durchlaufmaschinen müssen die plattenförmigen Werkstücke exakt zwischen die Transportkette und den Oberdruck an der Einlaufseite eingeführt werden, wozu in einfacherer bekannter Ausführung an der Einlaufseite der Maschine ein Auflagertisch für die Werkstücke vorgesehen ist, der niveaugleich mit der Transportebene der Transportkette ist und bis an die Transportkette heranreicht. Auf den Auflagertisch werden die Werkstücke von Hand aufgelegt und weiter von Hand zwischen die Transportkette und den Oberdruck der Durchlaufmaschine eingeführt.

Für den gleichen Zweck sind auch sogenannte Zuführhilfen bekannt, die aus synchron mit der Transportkette umlaufenden Transportbändern bestehen, auf welche die Platten aufgelegt und dementsprechend auf die Fördergeschwindigkeit der Transportkette gebracht werden. Es ist auch bekannt, die Transportkette an der Einlaufseite der Maschine über den Oberdruck hinaus zu verlängern, um entweder mit Einsatz einer solchen Zuführhilfe die Platten auf die Transportkette der Durchlaufmaschine aufzufahren oder die Platten von Hand auf die vorstehende Transportkette aufzulegen.

Für die genannte Zuführhilfe ist entscheidend, die Platten einerseits exakt zu führen und andererseits auf die Fördergeschwindigkeit der Transportkette zu bringen, was umso schwieriger ist, je höher diese Fördergeschwindigkeit ist. Eine höhere Fördergeschwindigkeit ist aber nur dann sinnvoll, wenn die Plattenfolge vergrößert werden kann, was bedeutet, daß die Abstände zwischen den einzelnen zu bearbeitenden Platten möglichst klein gehalten werden.

Eine Durchlaufmaschine der eingangs genannten Art ist aus dem Dokument DE 199 21 058 C1 bekannt. Als Mitnehmervorrichtung für die plattenförmigen Werkstücke ist an der Auflagervorrichtung ein Nockenpaar vorgesehen, dessen beide Mitnehmernocken für den Transport eines der Werkstücke zusammenwirken, daran also zugleich gemeinsam anliegen. Beide Nocken haben je einen eigenen Antrieb, die miteinander während der Vorschubbewegung synchronisiert sind, jedoch in der Vorschubrichtung gegeneinander versetzt sein können. Nach dem Einführen des jeweiligen Werkstücks zwischen den Oberdruck und der Transportkette müssen beide Mitnehmernocken des Nockenpaares erst wieder in die Ausgangslage zurückgefahren werden, bevor das nächstfolgende Werkstück ergriffen, vorgeschoben und zwischen Transportkette und Oberdruck eingeführt werden kann.

Der Erfindung liegt die Aufgabe zugrunde, an einer Durchlaufmaschine der vorgenannten Art eine Zuführhilfe vorzusehen, mit der mit höherer Taktzahl die einzelnen Platten erfaßt und zwischen die Transportkette und den Oberdruck der Maschine eingeführt werden können.

Diese Aufgabe wird mit einer Durchlaufmaschine gelöst, welche die Merkmale des Patentanspruchs 1 aufweist.

Für die Erfindung ist wesentlich, zumindest ein Nockenpaar mit einem ersten und einem zweiten Mitnehmernocken vorzusehen, welche jeweils die zu befördernde Platte erfassen, indem sie daran an der in Förderrichtung rückwärtigen Kante anschlagen. Es handelt sich hier um Platten von einem rechteckigen oder quadratischen Format, deren zu bearbeitende Kante senkrecht zu derjenigen rückwärtigen Kante steht, an der die Mitnehmernocken anschlagen. Die hohe Taktzahl wird dadurch erreicht, daß sich die beiden Mitnehmernocken eines Nockenpaares bei der Beförderung der in der Durchlaufrichtung aufeinanderfolgenden Platten einander abwechseln. Während der eine Mitnehmernocken die eine Platte bis zum Einzug zwischen der Transportkette und dem Oberdruck der Maschine vorschiebt, läuft der zuvor im Einsatz befindliche Mitnehmernocken in Richtung von der Transportkette weg zurück, um die jeweils nächstfolgende Platte zu erfassen und vorzuschieben. Grundsätzlich kann für den Rücklauf der Mitnehmernocken die gleiche Geschwindigkeit wie für den Förderhub vorgesehen werden, da jedoch auch zusätzlich Zeit für das Absenken und das Aufrichten der Mitnehmernocken beim Loslassen einer Platte und beim Erfassen einer nachfolgenden Platte benötigt wird, kann es zweckmäßig sein, für den Rücklauf der Mitnehmernocken eine höhere Geschwindigkeit als für den Förderhub vorzusehen.

Bei der heutigen kommissionsweisen Fertigung der in Rede stehenden Platten, die vorwiegend im Möbelbau verwendet werden, müssen unterschiedliche Plattenabmessungen in der Förderrichtung berücksichtigt werden. Um sich schneller und vor allem wirtschaftlicher unterschiedlichen Plattenabmessungen anpassen zu können, ist es von Vorteil, wenn zwei oder mehrere Paare von Mitnehmernocken vorgesehen werden, die in der Werkstückförderrichtung hintereinander angeordnet sind. Hierbei werden die jeweils ersten Mitnehmernocken und die jeweils zweiten Mitnehmernocken der Nockenpaare synchron miteinander bewegt, und es wird bei dem betreffenden, auf der Auflagervorrichtung positionierten Werkstück der optimal dazu bereitstehende Mitnehmernocken aktiviert, der zudem einen ausreichenden Förderweg bis hin zur Einzugstelle zwischen der Transportkette und dem Oberdruck der Maschine aufweist.

Die neue Einführhilfe wird ausschließlich beim sogenannten Querbetrieb der Durchlaufmaschine eingesetzt. Vom Querbetrieb der Durchlaufmaschine geht man aus, wenn die Werkstücke ein rechteckiges Format haben und an ihren kürzeren Rechteckseiten bearbeitet werden. Bei diesem Querbetrieb ist ein sicheres Einführen der Platten zwischen die Transportkette und den Oberdruck der Maschine ohne ein Verschwenken in der Plattenebene erforderlich. Hierfür sieht man quer zur Förderrichtung der Platten zwei oder mehrere Nockenpaare vor, wobei jeweils zwei erste Mitnehmernocken oder zwei zweite Mitnehmernocken zweier Nockenpaare den Werkstückvorschub besorgen. Hierbei ist zweckmäßig immer dasjenige Nockenpaar beteiligt, welches quer zur Durchlaufrichtung gesehen der Transportkette am nächsten liegt oder in Längsrichtung mit der Transportkette fluchtet. Letztlich können sowohl quer zur Werkstücktransportrichtung als auch in der Werkstücktransportrichtung Nockenpaare der beschriebenen Art vorgesehen werden, wobei die in Querrichtung angeordneten Nockenpaare jeweils in der Förderrichtung mit den davor oder dahinter liegenden Nockenpaaren fluchten. Auf diese Weise ist eine Gesamtfläche mit den Nockenpaaren abgedeckt, die jedem Werkstückformat gerecht wird.

Grundsätzlich läßt sich neue Einführhilfe auch an Durchlaufmaschinen einsetzen, bei denen aneinander parallel gegenüberliegenden Plattenseiten Kantenbearbeitungen vorgenommen werden, wie es bei einem Doppelendprofiler der Fall ist. Hierbei ist die Auflagervorrichtung so aufgebaut, daß die Nockenpaare spiegelbildlich zur in Werkstückförderrichtung liegenden Längsmitte der Auflagervorrichtung angeordnet sind.

Die Erfindung wird nachfolgend anhand der Zeichnung an einem Ausführungsbeispiel noch näher erläutert. Dabei zeigen:
- Fig .1: die Seitansicht der Einlaufseite einer Durchlaufmaschine für die Kantenbearbeitung an Platten und

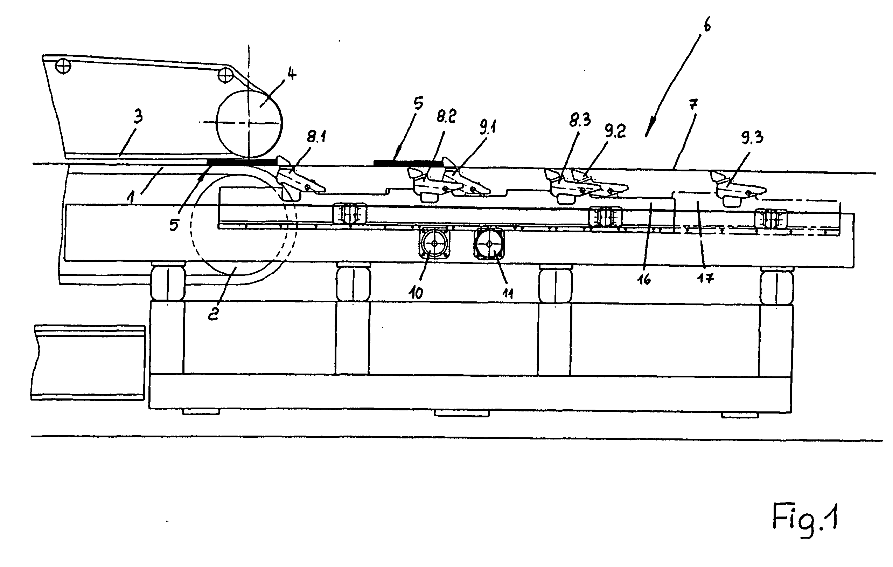

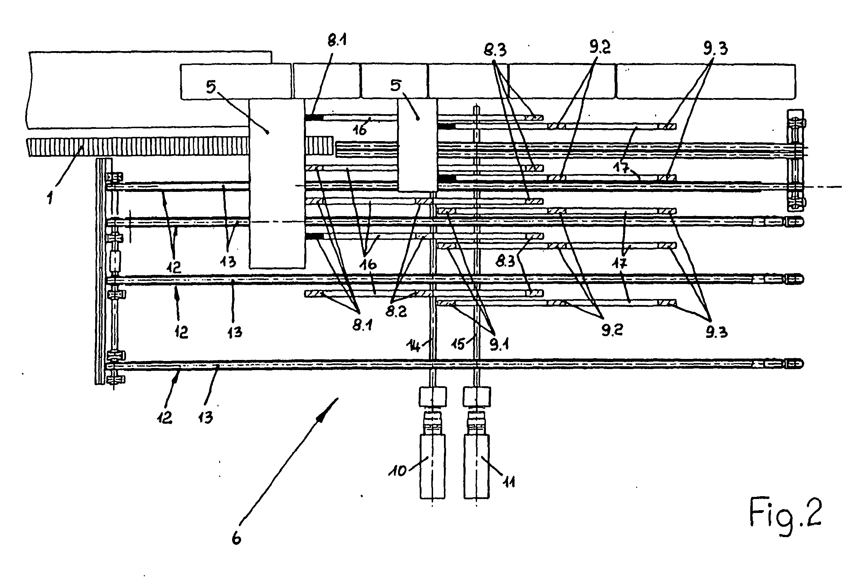

- Fig. 2: die Draufsicht auf den in Fig. 1 dargestellten Bereich der Durchlaufmaschine.

Die Durchlaufmaschine weist mehrere Bearbeitungsstationen auf, an der an der zumindest einen zu bearbeitenden Kante von Platten 5 Fräsarbeiten, das Aufbringen eines Kantenmaterials sowie das Besäumen und Abkappen des Kantenmaterials vorgenommen werden können. Diese Stationen sind in der Zeichnung nicht dargestellt. Zum Befördern der Platten 5 entlang dieser Stationen weist die Durchlaufmaschine eine Transportkette 1 auf, auf deren in der Regel horizontal laufendem Obertrum die Platten 5 aufgenommen werden. Oberhalb der Transportkette 1 ist ein sogenannter Oberdruck 3 angeordnet, bei dem es sich um einen Druckriemen handelt, der mit seinem zur Transportkette 1 hin liegenden Untertrum die Platten 5 gegen die Transportkette 1 verspannt. Die Transportkette 1 und der Oberdruck 3 haben in etwa die gleiche Länge, so liegen das vordere Umlenkrad 2 der Transportkette 1 und das vordere Umlenkrad 4 des Oberdrucks 3 etwa auf gleicher Höhe in Richtung der Maschinenlänge gesehen.

Die Platten 5 werden auf eine Auflagervorrichtung 6 aufgegeben, dies geschieht in der Regel maschinell. Die Auflagervorrichtung 6 hat eine Auflagerebene 7, die niveaugleich mit der Förderebene der Transportkette 1 ist. Wie man Fig. 2 entnimmt, wird die Auflagerebene 7 der Auflagervorrichtung 6 durch die Oberseiten von Tragschienen 12 gebildet, die sich in Richtung der Plattenförderrichtung erstrecken. Zur Unterstützung des Auffahrens der Platten 5 auf die Auflagervorrichtung 6 und zum Positionieren der Platten 5 auf den Tragschienen 12 dienen Transportbänder 13, die an den Tragschienen 12 angeordnet und nach oben über die Auflagerebene 7 hinaus anhebbar sowie nach unten bis unter die Auflagerebene 7 absenkbar sind.

An der Auflagervorrichtung 6 sind zum einen erste Mitnehmernocken 8.1, 8.2 und 8.3 sowie zum anderen zweite Mitnehmernocken 9.1, 9.2 und 9.3 kippbar gelagert, die in der einen Kipplage über die Auflagerebene 7 der Auflagervorrichtung 6 nach oben hin vorstehen und in der anderen Kipplage bis unter diese Auflagerebene 7 abgesenkt sind. Für den einfachsten Betrieb der als Zuführeinrichtung für die Transportkette 1 ausgestalteten Auflagervorrichtung 6 werden ein solcher erster Mitnehmernocken 8.1 und ein zweiter Mitnehmernocken 9.1 benötigt, die allgemein als Nockenpaar 8, 9 zu bezeichnen sind. Ein solches Nockenpaar 8, 9 ermöglicht den abwechselnden Vorschub aufeinanderfolgender Platten 5 zur Einzugstelle zwischen der Transportkette 1 und dem Oberdruck 3 hin mit hoher Taktzahl, weil beim Förderbetrieb des ersten Mitnehmernockens 8.1 mit der jeweiligen Platte 5 zur Einzugstelle hin der zweite Mitnehmernocken 9.1 in seine Ausgangsposition, die von der Einzugstelle wegliegt, zurückläuft. Beim Rücklauf sind in jedem Fall sowohl der erste Mitnehmernocken 8.1 als auch der zweite Mitnehmernocken 9.1 bis unter die Auflagerebene 7 der Auflagervorrichtung 6 abgesenkt. Beim Förderhub, also auf dem Weg von der Ausgangsposition zur Einzugstelle zwischen der Transportkette 1 und dem Oberdruck 3 hin, sind der erste Mitnehmernocken 8.1 und der zweite Mitnehmernocken 9.1 dann aufgerichtet, um über die Auflagerebene 7 nach oben vorzustehen, wenn damit ein Vorschub einer Platte 5 vorgenommen werden soll.

Dies ist nicht immer bei jedem der Mitnehmernocken 8.1 und 9.1 der Fall, wenn, wie beim Ausführungsbeispiel dargestellt, zum einen in der Werkstückförderrichtung mehrere Nockenpaare 8,9 hintereinander angeordnet sind und erste Mitnehmernocken 8.1, 8.2 und 8.3 sowie zweite Mitnehmernocken 9.1, 9.2 und 9.3 aufweisen. Es wird beim Förderhub immer nur derjenige der genannten Mitnehmernocken bis über die Auflagerebene 7 hinaus aufgerichtet, der in Abhängigkeit von dem jeweiligen Plattenformat für den Vorschub bei ausreichendem Vorschubweg in Betracht kommt.

Gleiches gilt auch für die quer zur Plattenvorschubrichtung vorhandenen ersten Mitnehmernocken 8.1 - 8.3 und zweiten Mitnehmernocken 9.1 - 9.3, von denen immer zwei die betreffende Platte an ihrer in Förderrichtung gesehen rückwärtigen Kante erfassen und zur Transportkette 1 hin vorschieben. Beim sogenannten Querbetrieb der Durchlaufmaschine wählt man immer diejenigen beiden Mitnehmernocken 8.1 - 8.3 oder 9.1 - 9.3 aus, welche die Platte mit einem größtmöglichen Abstand voneinander beim Vorschub abstützen, um ein Verschwenken der betreffenden Platte 5 in der Plattenebene zu vermeiden. So sind in diesem Fall zumindest immer diejenigen Mitnehmernocken 8.1 - 8.3 oder 9.1 - 9.3 beteiligt, deren Förder- oder Vorschubweg in oder nahe der Längsflucht der Transportkette 1 liegt.

Die jeweils im Einsatz befindlichen Mitnehmernocken 8.1 - 8.3 und 9.1 - 9.3 beschleunigen die von ihr geförderte Platte 5 auf die Fördergeschwindigkeit der Transportkette 1, wobei die Mitnehmernocken die Platte 5 dann freigeben, wenn sie zwischen der Transportkette 1 und dem Oberdruck 3 sicher erfaßt ist.

Die in Plattenförderrichtung hintereinander angeordneten Nockenpaare 8, 9 ermöglichen es, mit allen hintereinander liegenden ersten Mitnehmernocken 8.1 - 8.3 und zweiten Mitnehmernocken 9.1 - 9.3 den gleichen Förderhub auszuführen, um hierbei Platten unterschiedlicher Abmessungen in dieser Förderrichtung sicher zwischen die Transportkette 1 und den Oberdruck 3 einzuführen. Es werden, was sowohl den Förderhub als auch den Rücklauf betrifft, alle ersten Mitnehmernocken 8.1 - 8.3 einerseits sowie alle zweiten Mitnehmernocken 9.1 - 9.3 andererseits stets synchron miteinander verfahren.

Für den Antrieb der ersten Mitnehmernocken 8.1 - 8.3 dient ein erster Antrieb 10, der über eine Welle 14 mit darauf aufgesetzten Ritzeln in Eingriff mit Zahnstangen 16 steht, an denen die ersten Mitnehmernocken 8.1 - 8.3 kippbar gelagert sind. Für jeden dieser Mitnehmernocken ist eine gesonderte Hubvorrichtung vorhanden, um ihn über die Auflagerebene 7 hinaus anheben oder darunter absenken zu können. Gleiches gilt auch für die zweiten Mitnehmernocken 9.1 - 9.3. Letztere sind auf Zahnstangen 17 angeordnet, die mit auf einer Welle 15 sitzenden Ritzeln zusammenwirken, wobei diese Welle 15 mit einem Antrieb 11 gekuppelt ist.

Wie aus Fig. 2 ersichtlich ist, können mit der neuen Auflagervorrichtung auch großformatige Platten 5 zur Bearbeitung in der Durchlaufmaschine vorgeschoben werden. Bei solch großformatigen Platten 5 ist es nicht zwingend erforderlich, hohe Taktzahlen zu realisieren und deshalb kann es genügen, anstelle der Nockenpaare 8, 9 lediglich zwei quer zur Förderrichtung in Abstand voneinander stehende Mitnehmernocken 8.1, also nur die ersten Mitnehmernocken, vorzusehen. Diese Mitnehmernocken 8.1 schieben die jeweilige Platte 5 bis zum Einzug zwischen der Transportkette 1 und dem Oberdruck 3 vor, danach laufen die Mitnehmernocken 8.1 zurück, um die nachfolgende Platte 5 vorzuschieben.

Durch Weglassung der Mitnehmernocken 9.1 - 9.3 ergibt sich eine wesentliche konstruktive Vereinfachung der Auflagervorrichtung 6, damit sind bei den entsprechend vereinfachten Ausführungen Kosteneinsparungen möglich.

Für den Vorschub der erwähnten großformatigen Platten 5 können nach wie vor nicht nur die Mitnehmernocken 8.1 sondern auch die weiteren Mitnehmernocken 8.2 und 8.3 vorgesehen werden. Entscheidend ist bei den großformatigen Werkstücken, daß quer zur Werkstückförderrichtung eine zweifache Abstützung jeder Platte 5 erfolgt, um ein Verdrehen der Platte 5 in der Plattenebene beim Vorschub zu vermeiden.

## Patentansprüche

1. Durchlaufmaschine für die Bearbeitung von Platten (5) aus Holz und/oder Holzersatzstoffen entlang einer in der Durchlaufrichtung ausgerichteten Plattenkante mit einer die Platten (5) aufnehmenden Transportkette (1) sowie einem die Platten (5) darauf niederhaltenden Oberdruck (3) zur Beförderung der Platten (5) vorbei an Bearbeitungsstationen, zu denen hin die jeweils zu bearbeitende Plattenkante über die Transportkette (1) und den Oberdruck (3) vorsteht, und mit einer an der Einlaufseite angeordneten Auflagervorrichtung (6) für die Platten (5), deren Auflagerebene höhengleich mit der Transportebene der Transportkette (1) ist und bis an diese heranreicht, wobei an der Auflagervorrichtung (6) zumindest ein Nockenpaar (8, 9) mit einem ersten Mitnehmernocken (8.1) sowie einem zweiten Mitnehmernocken (9.1) in der Plattentransportrichtung hin- und herverfahrbar angeordnet ist und beide Mitnehmernocken (8.1, 9.1) eigene Förder- und Hubantriebe haben, über welche die Mitnehmernocken (8.1, 9.1) jeweils beim Förderhub zur Transportkette (1) hin nach oben über die Auflagerebene (7) der Auflagervorrichtung (6) hinaus angehoben und beim Rücklauf von der Transportkette (1) weg unter die Auflagerebene (7) abgesenkt sind,
**dadurch gekennzeichnet,**
**daß** die beiden Mitnehmernocken (8.1, 9.1) des Nokkenpaares (8, 9) als einander sich beim Förderhub sowie entsprechend beim Rücklauf abwechselnde, jeweils nacheinander eine Platte (5) verschiebende Mitnehmernocken ausgebildet sind.

2. Durchlaufmaschine nach Anspruch 1,
**dadurch gekennzeichnet,**
**daß** der Verfahrweg des einen Nockenpaares (8,9) oder zumindest eines der Nockenpaare (8,9) benachbart oder fluchtend mit der Längsrichtung der Transportkette (1) liegt.

3. Durchlaufmaschine nach Anspruch 1 oder 2,
**dadurch gekennzeichnet, daß** zwei oder mehrere Nockenpaare (8, 9) in der Plattentransportrichtung mit Abstand voneinander hintereinander an der Auflagervorrichtung (9) angeordnet sind, wobei die ersten Mitnehmernocken (8.1 - 8.3) und die zweiten Mitnehmernocken (9.1 - 9.3) synchron miteinander angetrieben und jeweils nur einer der synchron angetriebenen ersten oder zweiten Mitnehmernocken (8.1 - 8.3 oder 9.1 - 9.3) für den jeweiligen Förderhub aktivierbar und entsprechend über die Auflagerebene (7) der Auflagervorrichtung (6) angehoben ist.

4. Durchlaufmaschine nach einem der Ansprüche 1 - 3,
**dadurch gekennzeichnet,**
**daß** zwei oder mehrere Nockenpaare (8, 9) quer zur Plattentransportrichtung in Abstand voneinander sowie jeweils mit ihren ersten Mitnehmernocken (8.1 - 8.3) und mit ihren zweiten Mitnehmernocken (9.1 - 9.3) in der Querrichtung miteinander fluchtend an der Auflagervorrichtung (6) angeordnet sind, von denen jeweils der erste oder der zweite Mitnehmernokken (8.1 - 8.3 oder 9.1 - 9.3) des zur Seite der Transportkette (1) hin liegenden Nockenpaares (8, 9) und der entsprechende erste oder zweite Mitnehmernocken (8.1 - 8.3 oder 9.1 - 9.3) eines der weiteren, quer zur Plattenfördervorrichtung fluchtende Nockenpaare (8, 9) beim Förderhub aktivierbar und entsprechend über die Auflagerebene (7) der Auflagervorrichtung (6) angehoben sind.

5. Durchlaufmaschine nach Anspruch 3 und 4,
**dadurch gekennzeichnet,**
**daß** jedem der in der Plattentransportrichtung hintereinander angeordneten Nockenpaare (8, 9) wenigstens ein weiteres Nockenpaar (8, 9) quer zur Plattentransportrichtung zugeordnet ist.

6. Durchlaufschmaschine nach einem der Ansprüche 2 - 5,
**dadurch gekennzeichnet,**
**daß** der Förderäntrieb (10) der gemeinsame Antrieb für die ersten Mitnehmernocken (8.1 - 8.3) aller Nockenpaare (8, 9) und der Förderantrieb (11) der gemeinsame Antrieb für die zweiten Mitnehmernocken (9.1 - 9.3) aller Nockenpaare (8, 9) ist.

7. Durchlaufmaschine nach einem der Ansprüche 3 - 6
**dadurch gekennzeichnet,**
**daß** jeder Mitnehmernocken (8.1 - 8.2; 9.1 - 9.3) aller Nockenpaare (8, 9) einen eigenen Hubantrieb für das Anheben und Absenken relativ zur Auflagerebene (7) der Auflagervorrichtung (6) aufweist.

8. Durchlaufmaschine nach einem der Ansprüche 1 - 7,
**dadurch gekennzeichnet,**
**daß** bei vorhandenen zwei einander spiegelbildlich gegenüberliegenden Transportketten (1) und Oberdrukken (3) zur Bearbeitung der Platten (5) aneinander gegenüberliegenden Plattenkanten die Auflagervorrichtung (6) zu ihrer in Werkstückförderrichtung liegenden Längsmitte spiegelbildlich angeordnete Nockenpaare (8, 9) aufweist.

9. Durchlaufmaschine nach einem der Ansprüche 1 - 8,
**dadurch gekennzeichnet,**
**daß** die Auflagerebene (7) der Auflagervorrichtung (6) von in der Werkstückförderrichtung angeordneten Tragschienen (12) gebildet ist, wobei an jeder der Tragschienen (12) ein über die Auflagerebene (7) nach oben hinaus anhebbares sowie darunter absenkbares Förderband (13) angeordnet ist.

## Claims

1. Pass through machine for machining plates (5) or wood and/or wood substitute materials along a plate edge aligned in the pass-through direction, with a transport chain (1) receiving the plates (5) as well as an upper press (3) holding down the plates (5) to move the plates (5) past machining stations in relation to which the relevant plate edge to be machined protrudes over the transport chain (1) and the upper press (3), and with a bearing support device (6) mounted on the entry side for the plates (5) whose supporting plane is level with the transport plane of the transport chain (1) and reaches up to same whereby at least one cam pair (8,9) with a first entrainment cam (8.1) and a second entrainment cam (9.1) are mounted on the bearing support device (6) movable to and fro in the plate transport direction and both entrainment cams (8.1, 9.1) have their own conveyor and lift drives through which the entrainment cams (8.1, 9.1) are each lifted during the conveyor stroke towards the transport chain (1) upwards over the bearing support plane (7) of the bearing support device (6) and during the return are lowered from the transport chain (1) below the bearing support plane (7)
**characterised in that**
the two entrainment cams (8.1, 9.1) of the cam pair (8,9) are designed as entrainment cams which alternate during the conveyor stroke as well as correspondingly during the return to each move one plate (5) in succession.

2. Pass-through machine according to claim 1,
**characterised in that**
the travel path of the one cam pair (8,9) or at least one of the cam pairs (8,9) lies adjacent or in alignment with the longitudinal direction of the transport chain (1).

3. Pass-through machine according to claim 1 or 2,
**characterised in that**
two or more cam pairs (8,9) are mounted in the plate transport direction spaced from each other one behind the other on the bearing support device (9) whereby the first entrainment cams (8.1-8.3) and the second entrainment cams (9.1-9.3) are driven in synchronisation with each other and each time only one of the synchronously driven first or second entrainment cams (8.1-8.3, 9.1-9.3) can be activated for the relevant conveyor stroke and lifted correspondingly over the support plane (7) of the bearing support device (6).

4. Pass-through machine according to one of claims 1 to 3,
**characterised in that**
two or more pairs of cams (8,9) are arranged transversely to the plate transport direction spaced from each other as well as each time with their first entrainment cams (8.1-8.3) and with their second entrainment cams (9.1-9.3) mounted in the transverse direction aligned with each other on the bearing support device (6), of which each time the first or the second entrainment cam (8.1-8.3 or 9.1-9.3) of the cam pair (8,9) lying towards the side of the transport chain (1) and the corresponding first or second entrainment cam (8.1-8.3, or 9.1-9.3) of one of the further cam pairs (8,9) aligned transversely to the plate conveyor device can be activated during the conveyor stroke and correspondingly be lifted above the bearing plane (7) of the bearing support device (6).

5. Pass-through machine according to claim 3 and 4,
**characterised in that**
each of the cam pairs (8,9) arranged in succession in the plate transport direction is assigned at least one further cam pair (8,9) transversely to the plate transport direction.

6. Pass-through machine according to one of claims 2 to 5,
**characterised in that**
the conveyor drive (10) is the common drive for the first entrainment cam (8.1-8.3) of all the cam pairs (8,9) and the conveyor drive (11) is the common drive for the second entrainment cam (9.1-9.3) of all cam pairs (8,9).

7. Pass-through machine according to one of claims 3 to 6,
**characterised in that**
each entrainment cam (8.1-8.3 or 9.1-9.3) of all the cam pairs (8,9) has its own lift drive for the lifting and lowering relative to the bearing plane (7) of the bearing support device (6).

8. Pass-through machine according to one of claims 1 to 7,
**characterised in that**
with the presence of two transport;chains (1) and top presses (3) set mirror-symmetrical opposite one another for machining the plates (5) on opposing plate edges the bearing support device (6) has cam pairs (8,9) arranged mirror symmetrical relative to its longitudinal centre lying in the workpiece conveyor direction.

9. Pass-through machine according to one of claims 1 to 8,
**characterised in that**
the bearing plane (7) of the bearing support device (6) is formed by support rails (12) arranged in the workpiece conveyor direction whereby on each of the support rails (12) is mounted a conveyor belt (13) which can be lifted upwards beyond and lowered downwards below the bearing plane (7).

## Revendications

1. Machine pour le traitement en continu de panneaux (5) en bois et / ou en matériaux de remplacement de bois, le long d'un bord de panneau orienté dans la direction d'avancement, avec une chaîne de transport (1) recevant les panneaux (5), ainsi qu'avec un dispositif supérieur de compression (3) maintenant les panneaux (5) sur celle-ci pour le transport desdits panneaux (5), en passant par des postes de traitement de panneaux, vers lesquels le bord du panneau à traiter fait saillie au-delà de la chaîne de transport (1) et du dispositif supérieur de compression (3), et avec un dispositif de support (6) pour les panneaux (5), disposé du côté d'introduction, dont le plan de support est au même niveau que le plan de transport de la chaîne de transport (1) et s'étend jusqu'à celle-ci, le dispositif de support (6) étant équipé d'au moins une paire de cames (8, 9), avec une première came d'entraînement (8.1) ainsi qu'une deuxième came d'entraînement (9.1), mobile en va-et-vient dans la direction de transport des panneaux, et les deux cames d'entraînement (8.1, 9.1) possédant leurs propres mécanismes de transport et de levée par l'intermédiaire desquels les cames d'entraînement (8.1, 9.1) sont respectivement soulevées au-dessus du plan de support (7) du dispositif de support (6) lors de la course d'amenée vers la chaîne de transport (1), et abaissées en-dessous du plan de support (7), lors de la course de retour à partir de la chaîne de transport (1),
**caractérisée en ce que**
les deux cames d'entraînement (8.1, 9.1) de la paire de cames (8, 9) sont conçues en tant que cames d'entraînement entraînant successivement un panneau (5), l'une et l'autre, lors de la course d'amenée, et inversement lors du trajet de retour

2. Machine pour le traitement en continu selon la revendication 1,
**caractérisée en ce que**,
le parcours de déplacement de la paires de cames (8, 9) ou d'au moins l'une des paires de cames (8, 9) est adjacente ou en alignement par rapport au sens longitudinal de la chaîne de transport (1).

3. Machine pour le traitement en continu selon la revendication 1 ou 2,
**caractérisée en ce que**
deux ou plusieurs paires de cames (8, 9) sont agencées les unes derrières les autres, à distance les unes des autres, dans la direction de transport des panneaux, sur le dispositif de support (9), les premières cames d'entraînement (8.1 - 8.3) et les deuxièmes cames d'entraînement (9.1 - 9.3) étant commandées ensemble de manière synchrone, et seulement l'une des premières ou des deuxièmes cames d'entraînement commandées de manière synchrone (8.1 - 8.3 ou 9.1 - 9.3) pouvant être activée pour chaque course d'amenée et soulevée adéquatement au-dessus du plan de support (7) du dispositif de support (6).

4. Machine pour le traitement en continu selon l'une des revendications 1 à 3,
**caractérisée en ce que**
deux ou plusieurs paires de cames (8, 9) sont agencées sur le dispositif de support (6), perpendiculairement à la direction de transport des panneaux et à distance les unes des autres, ainsi qu'alignées, dans la direction transversale, avec leurs premières cames d'entraînement (8.1 - 8.3) et avec leurs deuxièmes cames d'entraînement (9.1 - 9.3), dont la première ou la deuxième came d'entraînement (8.1 - 8.3 ou 9.1 - 9.3) de la paire de cames (8, 9) disposée à côté de la chaîne de transport (1) et la première ou la deuxième came d'entraînement (8.1 - 8.3 ou 9.1 - 9.3) correspondante d'une autre paire de cames (8, 9) en alignement perpendiculairement à la direction de transport des panneaux peuvent être activées lors de la course d'amenée et adéquatement soulevées au-dessus du plan de support (7) du dispositif de support (6).

5. Machine pour le traitement en continu selon les revendications 3 et 4,
**caractérisée en ce que**,
à chacune des paires de cames (8, 9), disposées l'une derrière l'autre dans la direction de transport des panneaux, est associée au moins une autre paire de cames (8, 9), perpendiculaire à la direction de transport des panneaux.

6. Machine pour le traitement en continu selon l'une des revendications 2 à 5,
**caractérisée en ce que**
le mécanisme d'amenée (10) de la commande commune est pour les premières cames d'entraînement (8.1 - 8.3) de toutes les paires de cames (8, 9), et le mécanisme d'amenée (11) de la commande commune est pour les deuxièmes cames d'entraînement (9.1 - 9.3) de toutes les paires de cames (8, 9).

7. Machine pour le traitement en continu selon l'une des revendications 3 à 6,
**caractérisée en ce que**
chacune des cames d'entraînement (8.1 - 8.2 ; 9.1 - 9.3) de toutes les paires de cames (8, 9) possède son propre mécanisme de levée pour l'élévation et l'abaissement par rapport au plan de support (7) du dispositif de support (6).

8. Machine pour le traitement en continu selon l'une des revendications 1 à 7,
**caractérisée en ce que**,
lors de l'existence de deux chaînes de transport (1) et dispositifs supérieurs de compression (3) inversés pour le traitement des panneaux (5) sur des bords de panneaux opposés, le dispositif de support (6) présente des paires de cames (8, 9) disposées à l'inverse par rapport au centre de leur longueur orientée dans la direction de transport des pièces à traiter.

9. Machine pour le traitement en continu selon l'une des revendications 1 à 8,
**caractérisée en ce que**
le plan de support (7) du dispositif de support (6) est formé par des rails de support (12), disposés dans la direction de transport des pièces à traiter, à chacun des rails (12) étant agencé une bande transport (13) qui peut être remontée au-dessus du plan de support (7) ainsi que descendue au-dessous de celui-ci.
